# EUROPÄISCHE PATENTSCHRIFT

(11) **EP 2 085 634 B1**
(45) Veröffentlichungstag und Bekanntmachung des Hinweises auf die Patenterteilung: **22.02.2012**
(21) Anmeldenummer: 09151617.9
(22) Anmeldetag: 29.01.2009
(51) Int. Cl.: F16D 25/08

(54) **Hydraulisches Betätigungssystem für eine Kraftfahrzeugkupplung mit zwei Druckleitungen**
Hydraulic actuation system for a motor vehicle with two pressure lines
Système d'actionnement hydraulique pour un embrayage de véhicule automobile doté de deux canalisations

(30) Priorität: 01.02.2008 DE 102008007379
(43) Veröffentlichungstag der Anmeldung: 05.08.2009
(73) Patentinhaber: ZF Friedrichshafen AG, 88038 Friedrichshafen (DE)
(72) Erfinder: Conrad, Matthias, 97727 Fuchsstadt (DE); Frank, Markus, 97440 Werneck (DE); Gebauer, Dieter, 97502 Euerbach (DE); Morber, Roland, 97633 Sulzfeld (DE); Wegner-Braun, Holger, 97505 Geldersheim (DE)

(56) Entgegenhaltungen:
- EP-A- 0 082 893
- DE-A1- 10 231 789
- DE-U1- 29 624 637
- GB-A- 547 465
- GB-A- 753 516
- JP-A- 60 129 431
- US-A1- 2003 178 279
- US-A1- 2004 168 439

## Beschreibung

Die Erfindung betrifft ein hydraulisches Betätigungssystem für eine Kraftfahrzeugkupplung gemäß dem Oberbegriff von Patentanspruch 1.

Ein gattungsgemäßes Betätigungssystem geht beispielsweise aus der GB 547,465 hervor und umfasst einen Geber- und einen mittels einer Druckleitung verbundenen Nehmerzylinder, welche einen gemeinsamen Fluid-Druckraum ausbilden. Der Geberzylinder ist in bekannter Weise mittels einer Rohrleitung mit einem Fluid-Vorratsbehälter verbunden, aus dem Fluid in den Druckraum nachströmen kann und zugleich auch dort vorhandene Gasansammlungen entweichen können. Der Druckanschluss des Nehmerzylinders umfasst einen Hauptkanal mit einem federbelasteten Ventilkörper, welcher beim Ausrücken der Kupplung zur Freigabe des Hauptkanals verlagert wird, bei entgegengesetzter Strömungsrichtung zum Einrücken der Kupplung diesen Kanal jedoch verschließt. Strömungsmässig parallel zu dem Hauptkanal ist innerhalb des Nehmerzylinders ein Bypass-Kanal mit einem kleineren Querschnitt ausgebildet, der in beiden Strömungsrichtungen durchlässig ist. Auf diese Weise steht beim Einrücken der Kupplung nur der Bypass-Kanal zur Rückströmung von Fluid in den Geberzylinder zur Verfügung, wodurch die Einrückgeschwindigkeit der Kupplung gegenüber deren Ausrückgeschwindigkeit reduziert ist und somit ein Drehmomentstoß innerhalb eines Fahrzeugantriebsstranges bei einer plötzlichen Entlastung des Kupplungspedals gemildert werden kann.

Ein weiteres gattungsbildendes Betätigungssystem wird in der JP 60129431 A beschrieben. Zur Ermöglichung einer Pedalkraftjustage wird dort vorgeschlagen, in die Strömungsverbindung zwischen dem Geber- und dem Nehmerzylinder ein erstes einstellbares federbelastetes Kugelventil einzubringen, welches beim Betätigen des Kupplungspedals erst nach Überwindung der voreingestellten Widerstandskraft die Strömung in Richtung des Nehmerzylinders zum Öffnen der Kupplung freigibt. Bei einer Entlastung des Kupplungspedals fließt das Fluid unter Umgehung des ersten Ventils durch einen Bypass, in dem ein zweites federbelastetes Kugelventil angeordnet ist, welches lediglich die Rückströmung von Fluid in den Geberzylinder ermöglicht. Die Fluidverbindungen, d.h. die Fluidkanäle sind in den dort gezeigten Figuren nur schematisch dargestellt. Über deren konstruktive Realisierung ist keine Aussage entnehmbar.

Allen bekannten hydraulischen Kupplungsbetätigungssystem ist gemeinsam, dass infolge von unvermeidbaren Leckstellen innerhalb des von der Druckleitung, dem Geber- und dem Nehmerzylinder gebildeten Druckraumes im Laufe der Lebensdauer eingewisser Verlust von Hydraulikfluid auftritt, welcher von einem Gaseintritt in das hydraulische System begleitet wird. Bei Betätigungssystemen, bei denen der Geberzylinder geodätisch höher als der Nehmerzylinder angeordnet ist und wobei die Druckmittelzylinder mit einer im Fahrzeug kontinuierlich ansteigenden Druckleitung verbunden sind, können die Gaseinschlüsse selbständig in den Druckraum des Geberzylinders gelangen und über den dort vorhandenen Nachlaufanschluss entweichen. Zusätzlich kann auch an dem Nehmerzylinder eine Entlüftungsbohrung mit einem Entlüftungsventil angeordnet sein.

Es gibt jedoch auch Einbausituationen, bei denen der Verlauf der Druckleitung entsprechend den Gegebenheiten zahlreiche Bögen und neben steigenden auch zum Geberzylinder fallende Leitungsabschnitte aufweist. Hierbei gestaltet sich eine Entlüftung weitaus schwieriger, da sich die Gasansammlungen bevorzugt an solchen Bögen sammeln und dort dauerhaft in das hydraulische System eingeschlossen werden können.

Der Erfindung liegt von dieser Problematik die Aufgabe zugrunde, ein hydraulisches Betätigungssystem für eine Kraftfahrzeugkupplung mit einer verbesserten Entlüftbarkeit zu schaffen.

Diese Aufgabe wird bei einem gattungsgemäßen Betätigungssystem durch die kennzeichnenden Merkmale des Patentanspruchs 1 gelöst. Die abhängigen Ansprüche geben bevorzugte Ausgestaltungen und Weiterbildungen der Erfindung an.

Es wird somit ein hydraulisches Betätigungssystem für eine Kraftfahrzeugkupplung vorgeschlagen, welches zwei Druckmittelzylinder umfasst, von denen einer als Geberzylinder und der andere als Nehmerzylinder fungiert und wobei jeder Druckmittelzylinder ein Gehäuse aufweist mit einem darin in einer Laufbuchse verschiebbar angeordneten Kolben, der einen variablen Druckraum begrenzt und wobei an dem Druckraum ein Druckanschluss ausgeführt ist. Das hydraulische System umfasst weiter einen ersten Fluidkanal, der die Druckräume des Geber- und des Nehmerzylinders durch deren Druckanschlüsse zur Bildung eines mit einem Fluid befüllten gemeinsamen Druckraumes verbindet und der eine erste Druckleitung und eine Entlüftungseinrichtung zur Entlüftung des gemeinsamen Druckraumes aufweist. Es ist noch weiter ein zweiter Fluidkanal vorgesehen, der zumindest innerhalb eines gemeinsamen Erstreckungsabschnittes zu dem ersten Fluidkanal strömungsmäßig parallel angeordnet ist und wobei innerhalb des gemeinsamen Erstreckungsabschnittes zumindest in einem der Fluidkanäle ein erstes Ventil angeordnet ist, durch welches diesem Fluidkanal bei einem Betätigungszyklus der Kraftfahrzeugkupplung eine erste Fluid-Strömungsrichtung fest zugeordnet wird.

Das erfindungsgemäße hydraulische Betätigungssystem zeichnet sich insbesondere dadurch aus, dass der zweite Fluidkanal mittels einer zweiten Druckleitung ausgeführt ist und dass das Fluidkanal-Volumen zwischen der Kanal-Mündung der sich vereinigenden Fluidteilströme und dem Druckraum des zugeordneten Druckmittelzylinders kleiner ist als das bei einem Kolbenhub von dem Druckmittelzylinder verdrängte FluidVolumen und dass das Fluidkanal-Volumen zwischen der Kanal-Mündung des sich aufspaltenden Fluidstromes und dem Druckraum des zugeordneten Druckmittelzylinders kleiner ist als das Fluid-Teilvolumen, welches bei einem Betätigungshub durch das Ventil strömt.

Mit diesen Maßnahmen wird sichergestellt, das eingeschlossene Gasvolumina vor dem Erreichen der Entlüftungseinrichtung, die bevorzugt im Geberzylinder ausgeführt ist, nicht aus einem Fluidkanal in den dazu parallelen Fluidkanal eindringen können, sondern bei einem Betätigungshub sicher in den Geberzylinder befördert werden und dort über die Entlüftungseinrichtung aus dem hydraulischen System austreten können.

Der Erfindung liegt die Erkenntnis zugrunde, dass bei einem mit nur einer Druckleitung ausgeführten Betätigungssystem das Fluid bei einem aus einem Ein- und einem Ausrückvorgang bestehenden Betätigungszyklus einer Kraftfahrzeugkupplung um einen entsprechend dem vom Geberzylinder verdrängten Fluidvolumen bestimmten Weg in der Druckleitung lediglich hin- und wieder zurückverschoben wird und dass es dadurch für im Fluid befindliche Gasansammlungen schwierig und teilweise unmöglich ist, kritische Stellen im Druckleitungsverlauf zu überwinden, um diese dauerhaft in Richtung der Entlüftungseinrichtung verlassen können.

Die vorgeschlagene Lösung sieht davon abweichend vor, der Fluidströmung innerhalb des gemeinsamen Erstreckungsabschnittes der strömungsmäßig parallel angeordneten Druckleitungen bzw. Fluidkanäle eine für einen Betätigungszyklus feste Strömungsrichtung zu verleihen. Dadurch werden das in diesen Fluidkanalabschnitten befindliche Fluid und die darin eingeschlossenen Gase beim Ein- und Ausrücken der Kupplung kontinuierlich innerhalb der Druckleitungen weitertransportiert und können auf diese Weise durch die gerichtete Strömung die vorzugsweise im Geberzylinder angeordnete Entlüftungseinrichtung erreichen und dort aus dem Fluidkreislauf austreten. Es wird dadurch also bereits während des normalen Betriebs der Kupplung, d.h. beim Ein- und Ausrücken der Kupplung zum Gangwechsel eine verbesserte Entlüftung erzielt. Das Kupplungspedal kann auch mehrmals in Folge betätigt werden, wodurch eine länger anhaltende und starke Zwangsströmung des Fluids initiiert wird, welche Gasansammlungen aus kritischen Druckleitungsbereichen auch entgegen der natürlichen Auftriebsrichtung mitreißt und zur Entlüftungseinrichtung transportiert.

Dieser grundlegende Erfindungsgedanke kann auf vielfältige Weise an einem hydraulischen Betätigungssystem realisiert werden.

Zur Erzielung dieses Effektes genügt es bereits, wenn der Geber- und der Nehmerzylinder standardmäßig mit jeweils einem Druckanschluss ausgeführt sind und die zwischen diesen verlaufende Druckleitung zueinander strömungsmäßig parallel angeordnete Druckleitungsabschnitte aufweist, von denen einer mit einem Sperrventil, insbesondere einem Rückschlagventil bestückt ist und somit in diesem Abschnitt nur eine einzige Strömungsrichtung zulässt. Das heißt, innerhalb eines Druckmittelzylinders verläuft jeweils nur ein Fluidkanal, welcher außerhalb der Druckmittelzylinder in zwei parallele Kanäle aufgespalten und wieder zusammengeführt wird. In diesem Fall wäre zum Beispiel eine zum Nehmerzylinder gerichtete Strömung in beiden Druckleitungsabschnitten möglich, jedoch erfolgt der Rückfluss in Richtung Geberzylinder ausschließlich durch die ventillos ausgeführte Druckleitung, womit sich dort ein höherer Netto-Fluidstrom In Richtung des Geberzylinders ergibt.

Das Ventil kann alternativ dazu auch an der gegenseitigen Mündung der parallel verlaufenden Druckleitungsabschnitte angeordnet und dort z.B. als Wegeventil, insbesondere als 3/2-Wegeventil mit drei Fluidanschlüssen und zwei Schaltstellungen ausgeführt sein. Dabei wird in einer ersten Schaltstellung eine zum Nehmerzylinder gerichtete Fluidströmung durch die erste Druckleitung und in der zweiten Schaltstellung eine zum Geberzylinder gerichtete Fluidströmung durch die zweite parallel dazu verlaufende Druckleitung ermöglicht, wobei die jeweils andere Druckleitung für einen Durchfluss gesperrt ist.

Gemäß einer Ausgestaltung der Erfindung ist vorgesehen, dass auch innerhalb des gemeinsamen Erstreckungsabschnittes in dem jeweils anderen Fluidkanal ein zweites Ventil angeordnet ist, durch welches diesem Fluidkanal bei einem Betätigungszyklus eine zu der ersten entgegengesetzte zweite Fluid-Strömungsrichtung fest zugeordnet wird. Beide Ventile können dabei generell an einer beliebigen Position innerhalb des gemeinsamen Erstreckungsabschnittes der Druckleitungen angeordnet sein. Das oder die Ventile können fremdkraftbetätigt oder bevorzugt ohne äußere Energiequellen arbeiten und strömungs- oder druckgesteuert öffnen und/oder schließen.

Bezüglich der Anordnung der Fluidkanäle und des wenigstens einen Ventils kann vorgesehen sein, dass ein Ventil unmittelbar in einem Druckmittelzylinder integriert ist und der Druckmittelzylinder mit zwei Druckanschlüssen ausgeführt ist. Der jeweils andere Druckmittelzylinder kann dazu identisch ausgeführt oder mit nur einem Druckanschluss ausgeführt sein, wobei im letzteren Fall die beiden strömungsmäßig parallelen Fluidkanäle der Druckleitungen bereits vor dem Druckmittelzylinder wieder zusammengeführt werden.

Es bietet sich gemäß einer weiteren vorteilhaften Variante an, ein Ventil einteilig mit einer Druckleitung auszuführen. Dabei kann das Ventil beispielsweise in einem Fluidsteckelement oder innerhalb der Rohrleitung integriert sein. Weitergehend ist es ferner möglich, ein Ventil in Baueinheit mit einem weiteren hydraulischen Funktionselement, z.B. einem Peak Torque Limiter oder einem Dämpfungsglied in der Art eines Kribbelfilters, zu integrieren. Des Weiteren können das erste und das zweite Ventil in einer Baueinheit zu einem Ventilblock zusammengefasst sein.

Bezüglich der strömungsmäßig parallel verlaufenden Druckleitungen können diese voneinander baulich getrennt oder bevorzugt gemeinsam als Bauverbund ausgeführt werden.

Die Entlüftungseinrichtung wird bevorzugt an der geodätisch höchsten Position des hydraulischen Betätigungssystems angeordnet, insbesondere eignet sich dazu in den meisten Fällen der Geberzylinder mit der ohnehin an dieser vorgesehenen Nachlaufeinrichtung. Der Aufbau einer solchen Nachlaufeinrichtung ist dem Fachmann geläufig. Beispielhaft wird hierzu auf das grundlegend in der EP 1 602 544 A1 offenbarte Entlüftungsprinzip verwiesen. Bei dem in der vorliegenden Erfindung vorgeschlagenen hydraulischen Betätigungssystem kann somit der Geberzylinder zur Bildung der Nachlaufeinrichtung eine im Gehäuse angeordnete Primärdichtung und eine davon beabstandete Sekundärdichtung aufweisen, welche einen Nachlaufraum begrenzen, in welchen ein Nachlaufkanal mündet, durch den in der ausgefahrenen Stellung des Kolbens Fluid aus einem Nachlaufbehälter in den Nachlaufraum und weiter durch am Kolben ausgeführte Schnüffelöffnungen in den Druckraum einströmen kann.

Nachfolgend wird die Erfindung anhand von Ausführungsbeispielen und der anliegenden Figuren erläutert. Es zeigen:
- Fig. 1: ein schematische Darstellung eines hydraulischen Betätigungssystems für eine Kraftfahrzeugreibungskupplung gemäß dem Stand der Technik;
- Fig. 2: eine schematische Darstellung eines ersten, gegenüber Fig. 1 gemäß der vor- liegenden Erfindung modifizierten Betätigungssystems mit zwei Druckleitun- gen und einem Sperrventil;
- Fig.3: eine schematische Darstellung eines zweiten Betätigungssystems gemäß Fig. 2, wobei das Ventil in einen Druckmittelzylinder integriert ist;
- Fig. 4: eine schematische Darstellung eines dritten Betätigungssystems mit einem Wegeventil an der gegenseitigen Mündung von zwei Druckleitungen;
- Fig. 5: eine schematische Darstellung eines vierten Betätigungssystems mit einem in den Nehmerzylinder integrierten Zweiwegeventils;
- Fig. 6: eine schematische Darstellung eines fünften Betätigungssystems mit jeweils einem in zwei parallel verlaufenden Druckleitungen angeordneten Ventil.

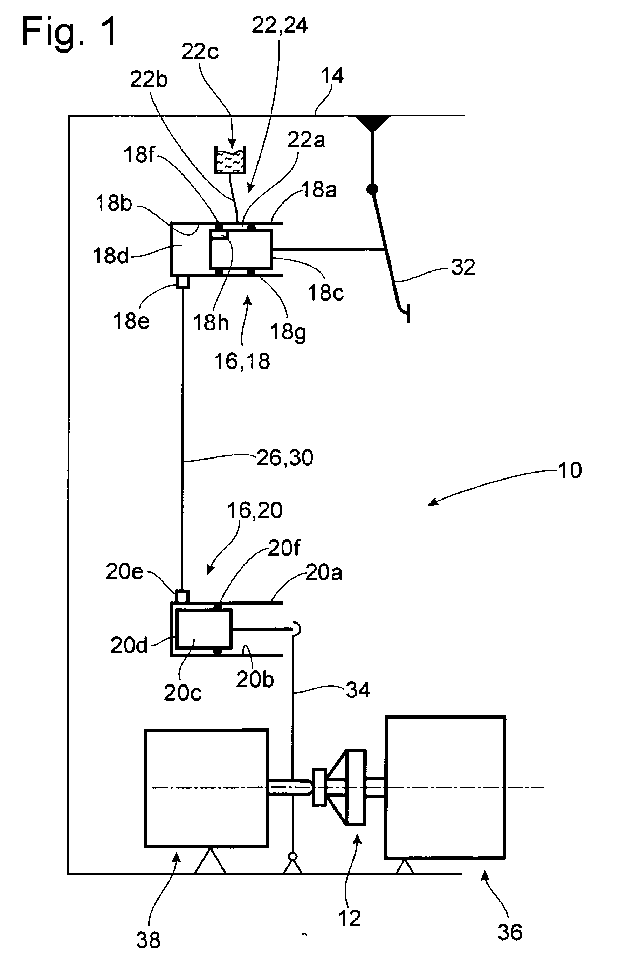

Gemäß Fig. 1 wird schematisch ein hydraulisches Betätigungssystem 10 zum Betätigen einer Kraftfahrzeugkupplung 12 gezeigt, welche an einem Chassis 14 eines Kraftfahrzeugs angeordnet ist und zwei Druckmittelzylinder 16 umfasst, von denen einer als Geberzylinder 18 und der andere als Nehmerzylinder 20 fungiert. Der Geberzylinder 18 umfasst ein Gehäuse 18a mit einer inneren Laufbuchse 18b, in der längsverschiebbar ein Kolben 18c geführt ist und der einen variablen Druckraum 18d mit einem Druckanschluss 18e begrenzt. Des Weiteren ist der Geberzylinder 18 zur Kompensation eines Fluidverlusts und zur gleichzeitigen Entlüftung des Betätigungssystems 10 mit einer Nachlaufeinrichtung 22 an sich bekannter Bauart ausgestattet.

Der Geberzylinder 18 weist zur Abdichtung des Druckraumes 18d eine gehäusefest angeordnete Primärdichtung 18f auf. Zur Bildung eines Nachlaufraumes 22a der Nachlaufeinrichtung 22 umfasst der Geberzylinder 18 eine weitere im Gehäuse 18a angeordnete und von der Primärdichtung 18f beabstandete Sekundärdichtung 18g sowie einen in den Nachlaufraum 22a mündenden Nachlaufkanal, welcher über eine Nachlaufleitung 22b mit einem Fluid-Vorratsbehälter bzw. Nachlaufbehälter 22c verbunden ist. In der ausgefahrenen Stellung des Kolbens 18c kann somit Fluid aus dem Nachlaufbehälter 22c in den Nachlaufraum 22a und weiter durch am Kolben 18c ausgeführte Schnüffelöffnungen bzw. -ausnehmungen 18h in den Druckraum 18d einströmen und in der entgegengesetzten Richtung können gleichzeitig in dem hydraulischen System 10 eingeschlossene Gasvolumina entweichen. Auf diese Weise stellt die Nachlaufeinrichtung 22 gleichzeitig eine Entlüftungseinrichtung 24 des hydraulischen Systems 10 dar.

Der Nehmerzylinder 20 umfasst ein Gehäuse 20a mit einer inneren Laufbuchse 20b, in der längsverschiebbar ein Kolben20c geführt ist und der einen variablen Druckraum 20d mit einem Druckanschluss 20e begrenzt, wobei der Druckraum 20d ebenfalls durch eine gehäusefeste Dichtung 20f gegenüber der Umgebung abgedichtet ist.

Das hydraulische Betätigungssystem 10 umfasst weiter einen ersten Fluidkanal 26, der die Druckräume 18d, 20d des Geber- und des Nehmerzylinders 18, 20 durch deren Druckanschlüsse 18e, 20e zur Bildung eines mit einem Fluid befüllten gemeinsamen Druckraumes verbindet, wozu zwischen den Druckmittelzylindern 18, 20 eine erste Druckleitung 30 verlegt und mittels zeichnerisch hier nicht dargestellten Steckverbindern mit den Druckanschlüssen 18e, 20e verbunden ist.

Es sei an dieser Stelle darauf hingewiesen, dass der Begriff Fluidkanal hauptsächlich im Sinne eines Fluid-Strömungsweges und der Begriff Druckleitung hauptsächlich zur Beschreibung einer gegenständlichen Realisierung des Kanals im Sinne einer Rohrleitung verwendet wird, welcher auch nur einen Abschnitt eines Fluidkanals bilden kann.

Der Kolben 18c des Geberzylinders 18 kann durch ein Pedal 32 betätigt werden und am Geberzylinder 18 in eine eingefahrene Stellung gebracht werden, woraufhin sich der Kolben 20c des Nehmerzylinders 20 verschiebt und sich dort in eine ausgefahrene Stellung begibt und eine Kupplungsgabel 34 zum Ausrücken der Kupplung 12 an einem als Verbrennungsmotor ausgebildeten Antriebsaggregat 26 steuert. Bei einer Entlastung des Pedals 32 zum Einrücken der Kupplung 12 bewegt sich der Kolben 18c des Geberzylinders 18 wieder in dessen ausgefahrene Stellung und der Kolben 20d des Nehmerzylinders 20 wieder in dessen eingefahrene Stellung. Die Kupplung 12 ist zur Übertragung eines Drehmoments eingangsseitig mit der Abtriebswelle des Verbrennungsmotors 36 und ausgangsseitig mit einem Schaltgetriebe 38 verbunden.

Soweit bisher beschrieben, entspricht das vorliegende Betätigungssystem 10 dem eingangs erläuterten Stand der Technik. Zur Verwirklichung der Erfindung wird jedoch die Ausgestaltung des zwischen den Druckmittelzylindern 18, 20 verlaufenden Fluidkanals 26 bzw. der Druckleitung 30 und bei einigen Ausführungsbeispielen die Ausgestaltung der Druckmittelzylinder 18, 20 im Bereich der Druckanschlüsse 18e, 20e modifiziert, wie dieses nachfolgend anhand vereinfachter Schemata mittels der Figuren detailliert ausgeführt wird. Dabei werden für gleiche Baugruppen oder Komponenten zu dem in Fig. 1 dargestellten Betätigungssystem identische Bezugsziffern benutzt. Die Pfeile geben dabei die Strömungsrichtung und beispielhafte Durchflussvolumina pro Betätigungshub an.

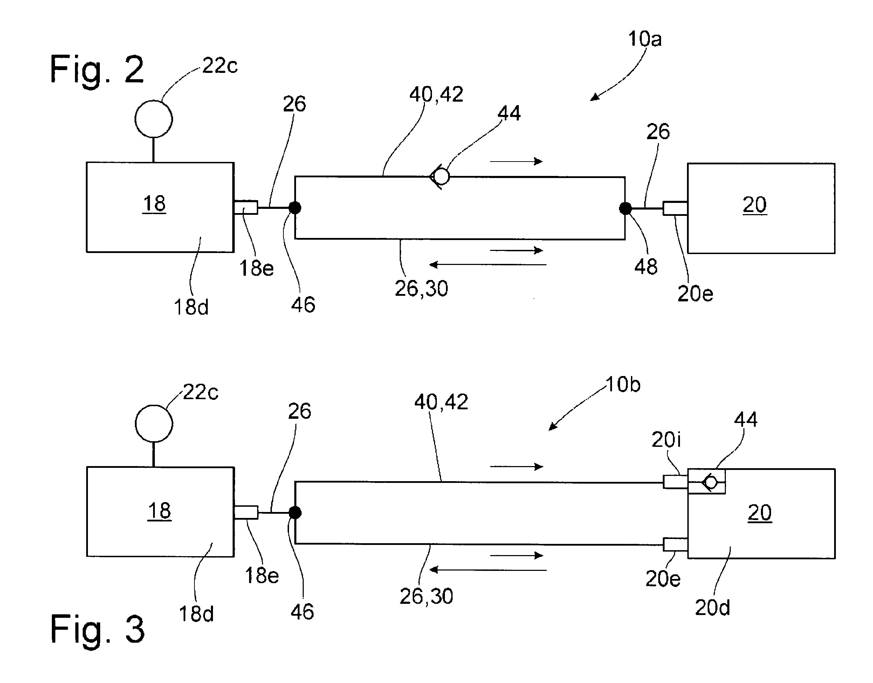

Fig. 2 zeigt dazu eine schematische Darstellung eines ersten Ausführungsbeispiels des erfindungsgemäßen hydraulischen Systems 10a mit einem Geberzylinder 18 mit einem Fluid-Vorratsbehälter 22c und mit einem Nehmerzylinder 20. Der Geber- und der Nehmerzylinder 18, 20 sind hierbei standardmäßig wie in Fig. 1 beschrieben mit jeweils einem Druckanschluß18e; 20e ausgeführt. Es ist erkennbar, dass zusätzlich zu dem ersten Fluidkanal 26 und der ersten Druckleitung 30 ein zweiter Fluidkanal 40 mit einer zweiten Druckleitung 42 vorgesehen ist, der zumindest innerhalb eines gemeinsamen Erstreckungsabschnittes zu dem ersten Fluidkanal 26 strömungsmäßig parallel angeordnet ist und dass innerhalb des gemeinsamen Erstreckungsabschnittes in dem zweiten Fluidkanal 40 ein erstes Ventil 44 angeordnet ist, durch welches diesem Fluidkanal 40 bei einem Betätigungszyklus der Kraftfahrzeugkupplung 12 eine erste Fluid-Strömungsrichtung fest zugeordnet wird. Das Ventil 44 ist in diesem Beispiel als Sperrventil, insbesondere als Rückschlagventil ausgeführt. Innerhalb eines Druckmittelzylinders 18, 20 verläuft somit jeweils nur ein Fluidkanal, d.h. der erste Fluidkanal 26, welcher außerhalb der Druckmittelzylinder 18, 20 in zwei parallele Kanäle 26, 40 aufgespalten und wieder zusammengeführt wird.

In diesem Fall ist eine zum Nehmerzylinder 20 gerichtete Fluid-Strömung beim Ausrücken der Reibungskupplung 12 in beiden Druckleitungs- bzw. FluidKanalabschnitten 26, 40; 30; 42 möglich, jedoch erfolgt der Rückfluss in Richtung Geberzylinder 18 ausschließlich durch die ventillos ausgeführte erste Druckleitung 30, womit sich dort ein höherer Netto-Fluidstrom in Richtung des Geberzylinders 18 ergibt und wodurch das Fluid zwischen dem Nehmer- 20 und dem Geberzylinder 18 mit einer in den parallelen Fluidkanälen 26, 40 festen Strömungsrichtung sozusagen umlaufen kann, anstelle wie im Stand der Technik bekannt, hin und her geschoben zu werden.

Die gegenseitigen Mündungen 46, 48 der Fluidkanäle 26, 40 sind nahe an den zugeordneten Zylinder-Druckräumen 18d, 20d angeordnet.

Das Fluidkanal-Volumen zwischen der Kanal-Mündung 48 der sich bei einer Betätigung des Geberzylinders 18 vereinigenden Fluidteilströme, d.h. in diesem Fall die dem Nehmerzylinder 20 zugewandte Mündung 48, und dem Druckraum 20d des zugeordneten Druckmittelzylinders 20, d.h. des Nehmerzylinders 20, ist dabei kleiner als das bei einem Kolbenhub von dem Druckmittelzylinder18, 20 verdrängte Volumen.

Das Fluidkanal-Volumen zwischen der Kanal-Mündung 46 des sich aufspaltenden Fluidstromes, d.h. in diesem Fall die dem Geberzylinder 18 zugewandte Mündung 46, und dem Druckraum 18d des zugeordneten Druckmittelzylinders 18, d.h. des Geberzylinders 18, ist kleiner als das Fluid-Teilvolumen, welches bei einem Betätigungshub durch das Ventil 44 strömt.

Gemäß einer Abwandlung von Fig. 2 ist in dem Ausführungsbeispiel von Fig. 3 vorgesehen, das Ventil 44 innerhalb eines der Druckmittelzylinder 16, in diesem Fall des Nehmerzylinders 20, baulich zu integrieren, was jedoch gleichzeitig einen zweiten Fluidanschluss 20i erforderlich macht. In diesem Fall liegt die Mündung 48 unmittelbar im Druckraum 20d.

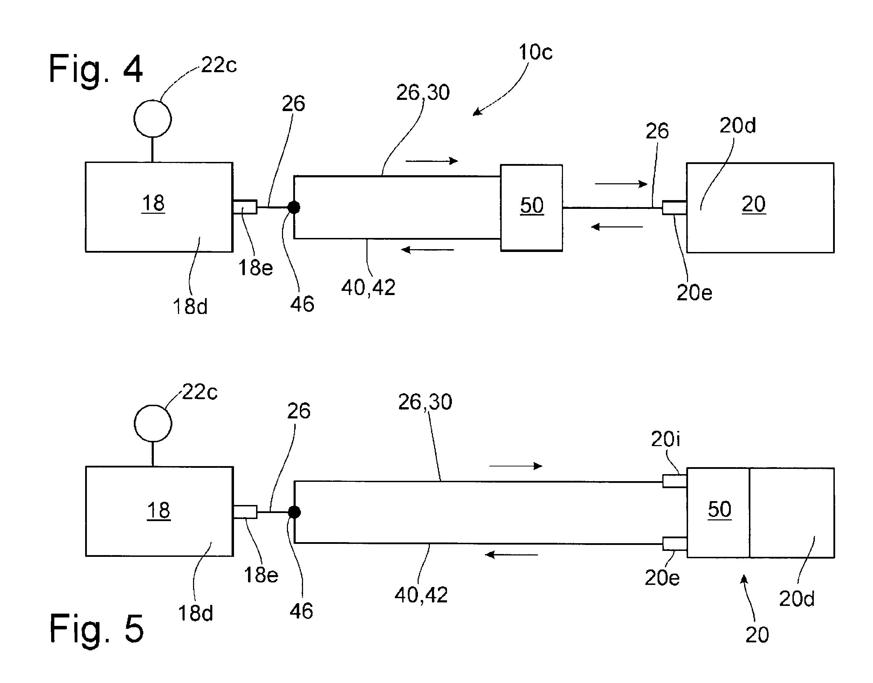

Wie in Fig. 4 dargestellt, kann das im Beispiel der Fig. 2 innerhalb einer Druckleitung angeordnete Ventil alternativ dazu auch an der gegenseitigen Mündung der parallel verlaufenden Fluidkanäle 26, 40 angeordnet und dort als Wegeventil 50 ausgebildet sein, wozu sich insbesondere ein 3/2-Wegeventil mit drei Fluidanschlüssen und zwei Schaltstellungen eignet. Dabei wird bei jedem Betätigungszyklus in einer ersten Schaltstellung eine zum Nehmerzylinder 20 gerichtete Fluidströmung durch den ersten Fluidkanal 26 die erste Druckleitung 30 und in der zweiten Schaltstellung eine zum Geberzylinder 18 gerichtete Fluidströmung durch die zweite, abschnittweise parallel dazu verlaufende Druckleitung 42 ermöglicht.

Das hydraulische Betätigungssystem von Fig. 5 basiert auf demjenigen von Fig. 4, wobei das Wegeventil 50 nunmehr in den Nehmerzylinder 20 integriert ist und dieser mit zwei Druckanschlüssen 20e, 20i ausgeführt ist.

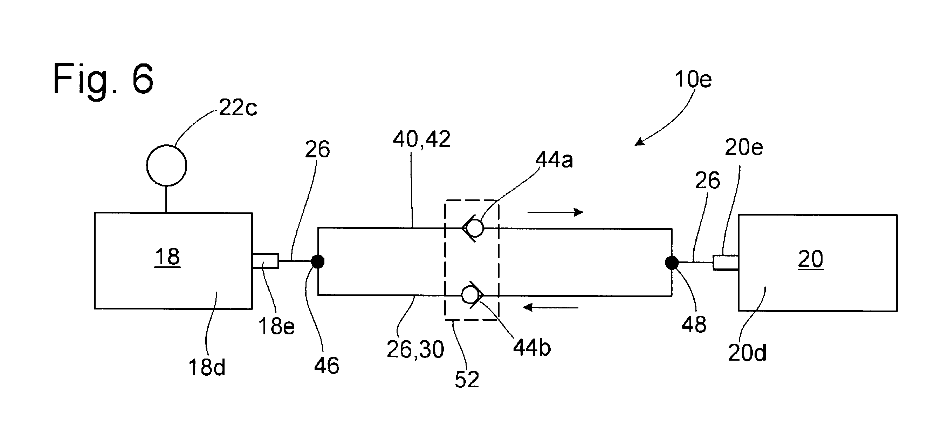

Die bisher erläuterten Ausführungsbeispiele umfassen lediglich ein einziges Ventil zur Erzeugung einer gerichteten Fluidströmung. Im Zusammenhang mit Fig. 6 werden weitere Varianten erläutert, wobei innerhalb des gemeinsamen Erstreckungsabschnittes der parallelen Fluidkanäle 26; 40 und in dem jeweils anderen Fluidkanal 40; 26 ein zweites Ventil angeordnet ist, durch welches diesem Fluidkanal bei einem Betätigungszyklus eine zu der ersten entgegengesetzte zweite Fluid-Strömungsrichtung fest zugeordnet wird.

Dazu ist bei dem Betätigungssystem 10e von Fig. 6, welches eine Abwandlung desjenigen von Fig. 2 darstellt, in dem Fluidkanal 26 ein weiteres Sperrventil 44b mit einer zu dem in dem Fluidkanal 40 angeordneten Ventil 44a entgegengesetzten Durchlassrichtung, insbesondere ein Rückschlagventil integriert. Jeder der beiden parallel angeordneten Fluidkanäle 26, 40 weist somit innerhalb des gemeinsamen Erstreckungsabschnittes eine feste Fluid-Strömungsrichtung auf. Die Lage der beiden Ventile 44a, 44b kann zu den Druckmittelzylindern 18, 20 identisch wie in Fig. 6 gezeigt oder auch verschieden sein, wobei z.B. das Ventil 44b nahe am Geberzylinder 18 und das andere Ventil 44a nahe am Nehmerzylinder 20 angeordnet ist. Bevorzugt ist dabei das beim Einfahren des Kolbens eines der Druckmittelzylinder 18, 20 offene bzw. öffnende Ventil 44a, b nahe am Druckraum 18d; 20d des jeweils anderen Druckmittelzylinders 20, 18 angeordnet.

Die Ventile können baulich getrennt oder baulich in einem Ventilblock 52, wie in Fig. 6 mit dem gestrichelt umrandeten Kästchen gezeigt, vereinigt ausgeführt sein. Es ist auch möglich, ein Ventil einteilig mit einer Druckleitung zu fertigen. Weiterhin kann ein Ventil ebenso in Baueinheit mit einem weiteren hydraulischen Funktionselement, z.B. einem Kribbelfilter realisiert sein.

Bezüglich der Ausgestaltung des strömungsmäßig parallel verlaufenden Erstreckungsabschnittes können die erste und die zweite Druckleitung 30, 42 gemeinsam als Bauverbund ausgeführt sein.

Die Entlüftungseinrichtung kann alternativ oder zusätzlich ebenso an dem Nehmerzylinder oder an einem anderen Ort innerhalb des hydraulischen Betätigungssystems, bevorzugt an der höchsten Position, vorgesehen sein.

## Patentansprüche

1. Hydraulisches Betätigungssystem (10a-e) für eine Kraftfahrzeugkupplung, umfassend
- zwei Druckmittelzylinder (16), von denen einer als Geberzylinder (18) und der andere als Nehmerzylinder (20) fungiert, wobei jeder Druckmittelzylinder (16) aufweist
- ein Gehäuse (18a, 20a), einen darin in einer Laufbuchse (18b, 20b) verschiebbar angeordneten Kolben (18c, 20c), der einen variablen Druckraum (18d, 20d) begrenzt und wobei an dem Druckraum (18d, 20d) ein Druckanschluss (18e, 20e) ausgeführt ist, und
wobei das hydraulische System (10a-e) weiter umfasst
- einen ersten Fluidkanal (26), der die Druckräume (18d, 20d) des Geber-(18) und des Nehmerzylinders (20) durch deren Druckanschlüsse (18e, 20e) zur Bildung eines mit einem Fluid befüllten gemeinsamen Druckraumes verbindet und der eine erste Druckleitung (30) und eine Entlüftungseinrichtung (24) zur Entlüftung des gemeinsamen Druckraumes aufweist, und wobei
- ein zweiter Fluidkanal (40) vorgesehen ist, der zumindest innerhalb eines gemeinsamen Erstreckungsabschnittes zu dem ersten Fluidkanal (26) strömungsmäßig parallel angeordnet ist und
- wobei innerhalb des gemeinsamen Erstreckungsabschnittes zumindest in einem der Fluidkanäle (26, 40) ein erstes Ventil (44; 44a; 50) angeordnet ist, durch welches diesem Fluidkanal (26, 40) bei einem Betätigungszyklus der Kraftfahrzeugkupplung eine erste Fluid-Strömungsrichtung fest zugeordnet wird,
wobei der zweite Fluidkanal (40) mittels einer zweiten Druckleitung (42) ausgeführt ist **dadurch gekennzeichnet, dass** das Fluidkanal-Volumen zwischen der Kanal-Mündung (48) der sich vereinigenden Fluidteilströme und dem Druckraum (20d) des zugeordneten Druckmittelzylinders (20) kleiner ist als das bei einem Kolbenhub von dem Druckmittelzylinder (18, 20) verdrängte Fluid-Volumen und dass das Fluidkanal-Volumen zwischen der Kanal-Mündung (46) des sich aufspaltenden Fluidstromes und dem Druckraum (18d) des zugeordneten Druckmittelzylinders (18) kleiner ist als das Fluid-Teilvolumen, welches bei einem Betätigungshub der Druckmittelzylinder (18, 20) durch das Ventil (44) strömt.

2. Hydraulisches Betätigungssystem nach Anspruch 1,
**dadurch gekennzeichnet,**
**dass** innerhalb des gemeinsamen Erstreckungsabschnittes in dem jeweils anderen Fluidkanal (26, 40) ein zweites Ventil (44b) angeordnet ist, durch welches diesem Fluidkanal (26, 40) bei einem Betätigungszyklus der Kraftfahrzeugkupplung eine zu der ersten entgegengesetzte zweite Fluid-Strömungsrichtung fest zugeordnet wird.

3. Hydraulisches Betätigungssystem nach Anspruch 1 oder 2,
**dadurch gekennzeichnet,**
**dass** ein Ventil (44, 44a, b) als Sperrventil ausgeführt ist.

4. Hydraulisches Betätigungssystem nach einem der vorhergehenden Ansprüche,
**dadurch gekennzeichnet,**
**dass** ein Ventil (50) als Wegeventil ausgeführt ist.

5. Hydraulisches Betätigungssystem nach einem der vorhergehenden Ansprüche,
**dadurch gekennzeichnet,**
**dass** ein Ventil (44, 50) in einem Druckmittelzylinder (16) integriert ist und der Druckmittelzylinder (16, 20) mit zwei Druckanschlüssen (20e, 20i) ausgeführt ist.

6. Hydraulisches Betätigungssystem nach einem der vorhergehenden Ansprüche,
**dadurch gekennzeichnet,**
**dass** ein Ventil (44, 44a, 44b) einteilig mit einer Druckleitung (30, 42) ausgeführt ist.

7. Hydraulisches Betätigungssystem nach einem der vorhergehenden Ansprüche, wobei dieses ein weiteres hydraulisches Funktionselement umfasst,
**dadurch gekennzeichnet,**
**dass** ein Ventil (44, 44a,b, 50) in Baueinheit mit dem weiteren Funktionselement ausgeführt ist.

8. Hydraulisches Betätigungssystem nach einem der vorhergehenden Ansprüche,
**dadurch gekennzeichnet,**
**dass** das erste und das zweite Ventil (44a,b) in einer Baueinheit zusammengefasst sind.

9. Hydraulisches Betätigungssystem nach einem der vorhergehenden Ansprüche,
**dadurch gekennzeichnet,**
**dass** die erste und die zweite Druckleitung (30, 42) gemeinsam als Bauverbund ausgeführt sind.

10. Hydraulisches Betätigungssystem nach einem der vorhergehenden Ansprüche,
**dadurch gekennzeichnet,**
**dass** die Entlüftungseinrichtung (24) am Geberzylinder (18) ausgeführt ist.

11. Hydraulisches Betätigungssystem nach einem der vorhergehenden Ansprüche,
**dadurch gekennzeichnet,**
**dass** die Entlüftungseinrichtung (24) durch eine Nachlaufeinrichtung (22) des Geberzylinders (18) gebildet wird.

12. Hydraulisches Betätigungssystem nach einem der vorhergehenden Ansprüche,
**dadurch gekennzeichnet,**
**dass** der Geberzylinder (18) zur Bildung der Nachlaufeinrichtung (22) eine im Gehäuse (18a) angeordnete Primärdichtung (18f) und eine davon beabstandete Sekundärdichtung (18g) aufweist, welche einen Nachlaufraum (22a) begrenzen, in welchen ein Nachlaufkanal mündet, durch den in der ausgefahrenen Stellung des Kolbens (18c) Fluid aus einem Nachlaufbehälter (22c) in den Nachlaufraum (22a) und weiter durch am Kolben (18c) ausgeführte Schnüffelöffnungen (18h) in den Druckraum (18d) einströmen kann.

## Claims

1. Hydraulic actuating system (10a-e) for a motor vehicle clutch, comprising
- two pressure medium cylinders (16), one of which functions as a master cylinder (18) and the other of which functions as a slave cylinder (20), wherein each pressure medium cylinder (16) has
- a housing (18a, 20a), a piston (18c, 20c) which is arranged in a movable manner therein in a cylinder liner (18b, 20b) and which delimits a variable pressure chamber (18d, 20d), and wherein a pressure port (18e, 20e) is formed on the pressure chamber (18d, 20d), and
wherein the hydraulic system (10a-e) also comprises
- a first fluid duct (26) which connects the pressure chambers (18d, 20d) of the master cylinder (18) and of the slave cylinder (20) via the pressure ports (18e, 20e) thereof so as to form a fluid-filled common pressure chamber and which has a first pressure line (30) and a ventilation device (24) for ventilating the common pressure chamber, and wherein
- a second fluid duct (40) is provided which, at least within a common region of extent, is arranged parallel in terms of flow with respect to the first fluid duct (26), and
- wherein, within the common region of extent, there is arranged at least in one of the fluid ducts (26, 40) a first valve (44; 44a; 50) by means of which said fluid duct (26, 40) is fixedly assigned a first fluid flow direction during an actuating cycle of the motor vehicle clutch,
wherein the second fluid duct (40) is formed by means of a second pressure line (42), **characterized in that** the fluid duct volume between the duct opening (48) of the merging fluid partial flows and the pressure chamber (20d) of the associated pressure medium cylinder (20) is smaller than the fluid volume displaced from the pressure medium cylinder (18, 20) during a piston stroke, and **in that** the fluid duct volume between the duct opening (46) of the splitting fluid flow and the pressure chamber (18d) of the associated pressure medium cylinder (18) is smaller than the fluid partial volume which flows through the valve (44) during an actuating stroke of the pressure medium cylinder (18, 20).

2. Hydraulic actuating system according to Claim 1, **characterized**
**in that**, within the common region of extent, there is arranged in the other fluid duct (26, 40) in each case a second valve (44b) by means of which said fluid duct (26, 40) is fixedly assigned a second fluid flow direction, which opposes the first fluid flow direction, during an actuating cycle of the motor vehicle clutch.

3. Hydraulic actuating system according to Claim 1 or 2,
**characterized**
**in that** a valve (44, 44a, b) is designed as a shut-off valve.

4. Hydraulic actuating system according to one of the preceding claims,
**characterized**
**in that** a valve (50) is designed as a directional control valve.

5. Hydraulic actuating system according to one of the preceding claims,
**characterized**
**in that** a valve (44, 50) is integrated in a pressure medium cylinder (16), and the pressure medium cylinder (16, 20) is formed with two pressure ports (20e, 20i).

6. Hydraulic actuating system according to one of the preceding claims,
**characterized**
**in that** a valve (44, 44a, 44b) is formed in one piece with a pressure line (30, 42).

7. Hydraulic actuating system according to one of the preceding claims, wherein said hydraulic actuating system comprises a further hydraulic functional element,
**characterized**
**in that** a valve (44, 44a, b, 50) is formed as a structural unit with the further functional element.

8. Hydraulic actuating system according to one of the preceding claims,
**characterized**
**in that** the first and the second valve (44a, b) are combined to form a structural unit.

9. Hydraulic actuating system according to one of the preceding claims,
**characterized**
**in that** the first and the second pressure line (30, 42) are formed jointly as a structural combination.

10. Hydraulic actuating system according to one of the preceding claims,
**characterized**
**in that** the ventilation device (24) is formed on the master cylinder (18).

11. Hydraulic actuating system according to one of the preceding claims,
**characterized**
**in that** the ventilation device (24) is formed by a replenishment device (22) of the master cylinder (18).

12. Hydraulic actuating system according to one of the preceding claims,
**characterized**
**in that**, to form the replenishment device (22), the master cylinder (18) has a primary seal (18f) arranged in the housing (18a) and has a secondary seal (18g) spaced apart from said primary seal, said seals delimiting a replenishment chamber (22a) into which opens a replenishment duct through which, in the deployed position of the piston (18c), fluid can flow out of a replenishment vessel (22c) into the replenishment chamber (22a) and onward, through snifting openings (18h) formed on the piston (18c), into the pressure chamber (18d).

## Revendications

1. Système d'actionnement hydraulique (10a-e) pour un embrayage de véhicule automobile, comprenant :
- deux cylindres de fluide sous pression (16), dont l'un sert de maître-cylindre (18) et l'autre de cylindre récepteur (20), chaque cylindre de fluide sous pression (16) présentant .
- un boîtier (18a, 20a), un piston (18c, 20c) disposé de manière coulissante dans une chemise de cylindre (18b, 20b), qui limite un espace de pression variable (18d, 20d), un raccord de pression (18e, 20e) étant réalisé au niveau de l'espace de pression (18d, 20d), et
le système hydraulique (10a-e) comprenant en outré :
- un premier canal fluidique (26) qui relie les espaces de pression (18d, 20d) du maître-cylindre (18) et du cylindre récepteur (20) par leurs raccords de pression (18e, 20e) pour former un espace de pression commun rempli de fluide, et qui présente une première conduite de pression (30) et un dispositif de désaérage (24) pour désaérer l'espace de pression commun, et
- un deuxième canal fluidique (40) étant prévu, lequel est disposé au moins à l'intérieur d'une portion d'étendue commune d'écoulement parallèle au premier canal fluidique (26) et
- une première soupape (44 ; 44a ; 50) étant disposée à l'intérieur de la portion d'étendue commune au moins dans l'un des canaux fluidiques (26, 40), laquelle soupape permet d'associer fixement à ce canal fluidique (26, 40), lors d'un cycle d'actionnement de l'embrayage du véhicule automobile, un premier sens d'écoulement de fluide,
le deuxième canal fluidique (40) étant réalisé au moyen d'une deuxième conduite de pression (42),
**caractérisé en ce que** le volume du canal fluidique entre l'embouchure du canal (48) des flux partiels fluidiques se réunissant et l'espace de pression (20d) du cylindre de fluide sous pression associé (20) est plus petit que le volume de fluide refoulé lors d'une course du piston par le cylindre de fluide sous pression (18, 20), et **en ce que** le volume du canal fluidique entre l'embouchure du canal (46) du flux de fluide se divisant et l'espace de pression (18d) du cylindre de fluide sous pression associé (18) est plus petit que le volume partiel de fluide qui s'écoule à travers la soupape (44) lors d'une course d'actionnement du cylindre de fluide sous pression (18, 20).

2. Système d'actionnement hydraulique selon la revendication 1,
**caractérisé en ce**
**qu'**une deuxième soupape (44b) est disposée à l'intérieur de la portion d'étendue commune dans l'autre canal fluidique respectif (26, 40), laquelle deuxième soupape permet d'associer fixement à ce canal fluidique (26, 40), lors d'un cycle d'actionnement de l'embrayage du véhicule automobile, un deuxième sens d'écoulement de fluide opposé au premier.

3. Système d'actionnement hydraulique selon la revendication 1 ou 2,
**caractérisé en ce**
**qu'**une soupape (44, 44a, b) est réalisée sous forme de soupape d'arrêt.

4. Système d'actionnement hydraulique selon l'une quelconque des revendications précédentes,
**caractérisé en ce**
**qu'**une soupape (50) est réalisée sous forme de bloc-distributeur.

5. Système d'actionnement hydraulique selon l'une quelconque des revendications précédentes,
**caractérisé en ce**
**qu'**une soupape (44, 50) est intégrée dans un cylindre de fluide sous pression (16) et le cylindre de fluide sous pression (16, 20) est réalisé avec deux raccords de pression (20e, 20i).

6. Système d'actionnement hydraulique selon l'une quelconque des revendications précédentes,
**caractérisé en ce**
**qu'**une soupape (44, 44a, 44b) est réalisée d'une seule pièce avec une conduite de pression (30, 42).

7. Système d'actionnement hydraulique selon l'une quelconque des revendications précédentes,
**caractérisé en ce**
**qu'**une soupape (44, 44a, b, 50) est réalisée sous forme d'unité constructive avec l'autre élément fonctionnel.

8. Système d'actionnement hydraulique selon l'une quelconque des revendications précédentes,
**caractérisé en ce que**
la première et la deuxième soupape (44a, b) sont réunies dans une unité constructive.

9. Système d'actionnement hydraulique selon l'une quelconque des revendications précédentes,
**caractérisé en ce que**
la première et la deuxième conduite de pression (30, 42) sont réalisées ensemble sous forme d'assemblage constructif.

10. Système d'actionnement hydraulique selon l'une quelconque des revendications précédentes,
**caractérisé en ce que**
le dispositif de désaérage (24) est réalisé sur le maître-cylindre (18).

11. Système d'actionnement hydraulique selon l'une quelconque des revendications précédentes,
**caractérisé en ce que**
le dispositif de désaérage (24) est formé par un dispositif d'alimentation complémentaire (22) du maître-cylindre (18).

12. Système d'actionnement hydraulique selon l'une quelconque des revendications précédentes,
**caractérisé en ce que**
le maître-cylindre (18), pour former le dispositif d'alimentation complémentaire (22), présente un joint d'étanchéité primaire (18f) disposé dans le boîtier (18a) et un joint d'étanchéité secondaire (18g) espacé de celui-ci, lesquels joints d'étanchéité délimitent un espace d'alimentation complémentaire (22a), dans lequel débouche un canal d'alimentation complémentaire, à travers lequel, dans la position sortie du piston (18c), du fluide peut affluer depuis un récipient d'alimentation complémentaire (22c) dans l'espace d'alimentation complémentaire (22a) et à nouveau dans l'espace de pression (18d) à travers des ouvertures de reniflard (18h) réalisées au niveau du piston (18c).
